# EUROPEAN PATENT APPLICATION

(11) **EP 2 555 032 A2**
(43) Date of publication of application: **06.02.2013**
(21) Application number: 12177465.7
(22) Date of filing: 23.07.2012
(51) Int. Cl.: G02B 6/42

(54) **Casing for communication device**

(30) Priority: 02.08.2011 TW 100214260
(71) Applicant: Askey Technology (Jiangsu) Ltd., Economic-Technological Development Area Wujiang Jiangsu (CN); Askey Computer Corp., New Taipei City 235 (TW)
(72) Inventor: Peng, Kuo-Chan, 324 Pingzhen City, Taoyuan County (TW); Hsieh, Ching-Feng, 108 Taipei City (TW)
(74) Representative: Bonvicini, Davide

(57) **Abstract**

A casing for a communication device includes a first casing and a second casing and receives a circuit board. A power element and an optical fiber element are mounted on the circuit board. A baffle is disposed in the first casing and corresponds in position to the optical fiber element for forming an insulating space in the vicinity thereof and thereby insulating the optical fiber element from the power element. With the casing, the optical fiber element that differs from the power element in an operating temperature range or heat dissipation requirement is insulated from the power element, such that the optical fiber element and the power element are provided with appropriate operating temperatures, respectively, and thus can operate well. The casing prevents cooling fins and thermal grease from deteriorating in performance after long use. The baffle and the first casing are integrally formed as a unitary structure.

## Description

### FIELD OF THE INVENTION

The present invention relates to casings for communication devices, and more particularly, to a casing adapted for use with a communication device and designed to separate electronic components which are disposed inside the communication device and differ in ranges of operating temperature and requirements for heat dissipation.

### BACKGROUND OF THE INVENTION

Optical fiber transmission technology is widely used in various forms of electronic communication to meet the need for high-speed, broadband network-based transmission. Plenty communication devices are equipped with optical fiber elements therein. Take a gigabit-capable passive optical network (GPON) - an embodiment of today's mainstream technology for broadband networks - as an example, an optical fiber element, such as an optical transceiver (such as bi-directional optical sub-assembly (BOSA)), is disposed inside an optical network terminal (ONT) connected to a central network. The optical fiber element mainly uses an optical fiber as a medium for transmitting signals in order to fulfill the purpose Fiber To The Home (FTTH).

Normally, inside the conventional communication device is a circuit board which is mounted thereon with electronic components, such as an IC chip, a CPU, a memory, and a receiving/transmitting module. The electronic components have their respective optimal operating temperate ranges. During the operation of the communication device, the electronic components generate heat and thus raise the ambient temperature to the detriment of the performance of the electronic components mounted on a circuit board. The IC chip, the CPU, and the memory each have a power that ranges between 15W and 25W and thus generate heat intensely. The electronic components which generate heat readily when operating are hereinafter referred to as the "power elements." Normally, the maximum temperature at which the power elements remain heat-resistant ranges between 110 and 125 . Although the operation of communication device is accompanied by a continuous increase in the ambient temperature, the power elements can still function well. With the optical receiving/transmitting module, such as an optical transceiver, being equipped with an optical fiber therein, the optical receiving/transmitting module is hereinafter referred to as the "optical fiber element", and remains heat-resistant at an operating temperature below just 85 . Hence, the maximum heat-resistant operating temperature of the power elements is 25-35 higher than that of the optical fiber element. As a result, the optical fiber element has a stricter heat dissipation requirement than the power elements do. Hence, the heat dissipation design of the power elements is different from that of the optical fiber element.

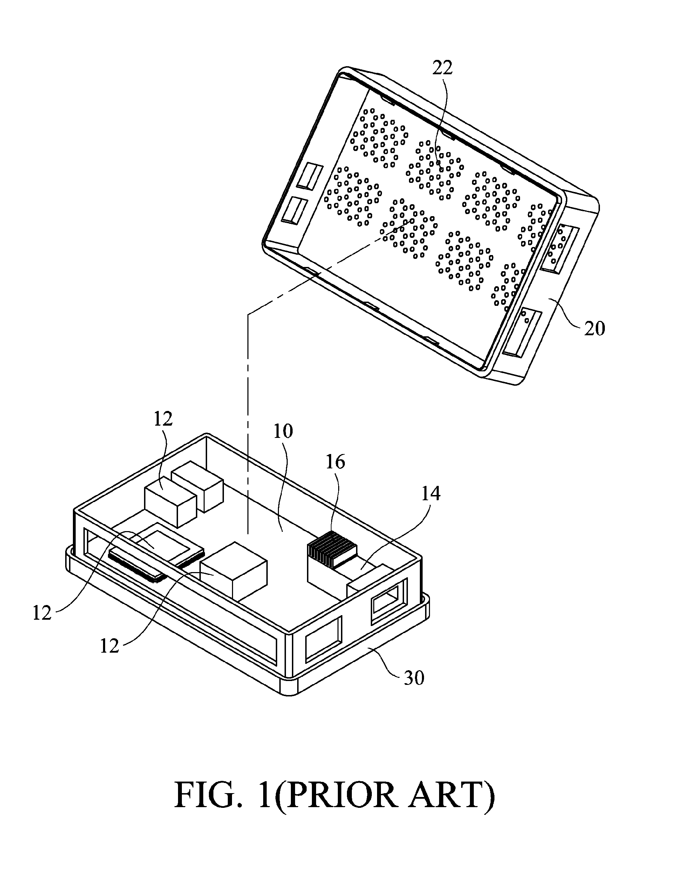

With electronic products becoming more compact and lightweight, their communication devices are accommodated in increasingly small casings, respectively. The casings are too small to accommodate any external active heat-dissipating apparatus, such as a fan. Referring to FIG. 1, regarding a conventional small communication device, cooling fins 16 are disposed on an optical fiber element 14 mounted on a circuit board 10 for dissipating the heat generated by the optical fiber element 14 to protect the optical fiber element 14 from performance deterioration or even damage which might otherwise occur because the ambient temperature rises as a result of the heat generated by a power element 12 nearby. Thermal compound or thermal paste has to be applied to between the optical fiber element and the cooling fins for two reasons: effective and efficient heat transfer therebetween, and adhesive bonding therebetween. However, after long use at high temperatures, the thermal compound or thermal paste denatures and eventually ends up in dysfunction, and in consequence the following occur: deterioration of heat dissipation performance, separation of the cooling fins from the optical fiber element, failure to dissipate heat by heat transfer, and eventually cooling fins detachment. Furthermore, the dimensions of the cooling fins employed are limited by the space within the communication device; hence, the cooling fins in use are often of small size and therefore demonstrate limited heat dissipation performance. Last but not least, in the eyes of manufacturers, the cooling fins are additional parts which incur material costs and processing costs.

In short, cooling fins for use with an optical fiber element of a conventional small communication device to dissipate heat has advantages as follows: deterioration of reliability after long use, bulkiness, and high material costs and processing costs.

### SUMMARY OF THE INVENTION

The present invention relates to a casing adapted for use with a communication device and designed to separate a power element and an optical fiber element which are disposed inside the communication device and differ in ranges of operating temperature and requirements for heat dissipation, prevent deterioration of the heat dissipation performance of the power element and the optical fiber element after long use, and cut material costs and processing costs which might otherwise be incurred during a manufacturing process.

In order to achieve the above and other objectives, the present invention provides a casing for a communication device. The casing receives a circuit board. A power element and an optical fiber element are mounted on the circuit board. The casing comprises: a first casing comprising a plurality of heat-dissipating apertures; a baffle disposed inside the first casing and corresponding in position to the optical fiber element for forming an insulating space in the vicinity of the optical fiber element and insulating the optical fiber element from the power element; and a second casing engaged with the first casing for receiving the circuit board inside the casing.

The baffle is inverted U-shaped, U-shaped, L-shaped, curved, semicircular, or T-shaped.

At least one of the heat-dissipating apertures corresponds in position to the optical fiber element.

The baffle abuts against the circuit board.

An opening corresponding in shape to the baffle is formed on the circuit board, such that the baffle penetrates the circuit board by passing through the opening.

The baffle and the first casing are integrally formed as a unitary structure.

Hence, the present invention provides a casing for a communication device. The casing comprises a first casing, a baffle disposed inside the first casing, and a second casing. The second casing and the first casing can be put together and thus engaged with each other, such that an optical fiber element and a power element can be received in the casing. The baffle insulates the optical fiber element from the power element, so as to lessen thermal conduction and radiation whereby heat generated by the power element in operation is transferred to the optical fiber element. Hence, the casing is conducive to separation of the power element and the optical fiber element which are mounted on a circuit board inside the casing and differ in ranges of operating temperature and requirements for heat dissipation. Thermal compound or thermal paste has to be applied to between the optical fiber element and cooling fins to enable heat dissipation according to the prior art. Given the baffle, it is feasible to prevent the thermal compound or thermal paste from denaturing or evaporating and eventually ending up in dysfunction and disconnection after long use at high temperatures. Hence, the casing of the present invention is conducive to the enhancement of the reliability and durability of the communication device accommodated in the casing. Furthermore, the baffle and the first casing are integrally formed as a unitary structure to enhance the structural stability therebetween and enable a manufacturing process thereof to be carried out by injection molding. Unlike the prior art that teaches dissipating heat from a communication device by means of additional external cooling fins disposed thereon, the present invention provides a casing adapted for use with a communication device and designed to cut component costs and processing costs which might otherwise be incurred in a manufacturing process thereof.

### BRIEF DESCRIPTION OF THE DRAWINGS

Objectives, features, and advantages of the present invention are hereunder illustrated with specific embodiments in conjunction with the accompanying drawings, in which:
FIG. 1 (PRIOR ART) is a schematic view of the inside of a conventional communication device, showing that a power element and an optical fiber element are mounted on a circuit board;
FIG. 2 is a schematic view of a casing for a communication device according to the first embodiment of the present invention, showing a circuit board received in the opened casing;
FIG. 3 is a schematic view of a casing for a communication device according to the first embodiment of the present invention, showing the circuit board received in the closed casing;
FIG. 4 is a schematic view of a casing for a communication device according to the first embodiment of the present invention, showing an L-shaped baffle disposed in the opened casing; and
FIG. 5 is a schematic view of a casing for a communication device according to the second embodiment of the present invention, showing the circuit board received in the opened casing.

### DETAILED DESCRIPTION OF THE PREFERRED EMBODIMENTS

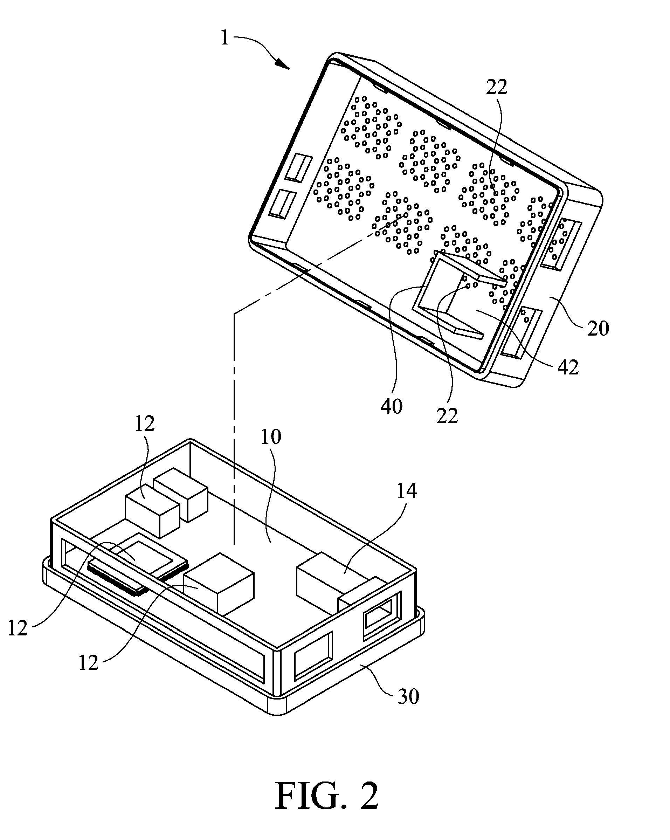

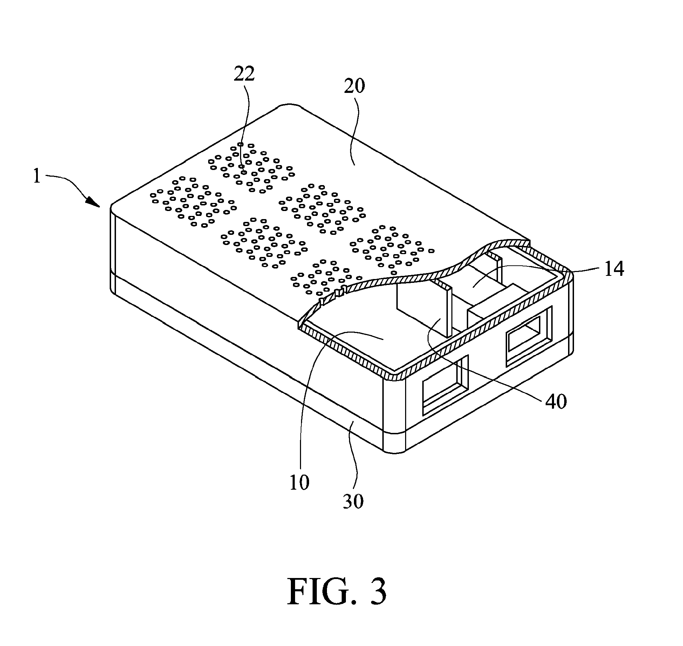

Referring to FIG. 2 and FIG. 3, there are shown schematic perspective views of a casing for a communication device according to the first embodiment of the present invention. As shown in FIG. 2 and FIG. 3, a casing 1 receives a circuit board 10. A power element 12 and an optical fiber element 14 are mounted on the circuit board 10. The casing 1 comprises a first casing 20, a baffle 40, and a second casing 30. The first casing 20 comprises a plurality of heat-dissipating apertures 22 for dissipating heat to the outside. The baffle 40 is disposed inside the first casing 20 and corresponds in position to the optical fiber element 14 for forming an insulating space 42 in the vicinity of the optical fiber element 14, insulating the optical fiber element 14 from the power element 12, and shutting in hot heat generated by the power element 12. The second casing 30 and the first casing 20 can be put together and thus engaged with each other, such that the circuit board 10 is received in the casing 1. The baffle 40 forms the insulating space 42 for receiving the optical fiber element 14 therein, such that the optical fiber element 14 is insulated from the power element 12. The insulating space 42 corresponds in position to the optical fiber element 14 mounted on the circuit board 10, thereby allowing the optical fiber element 14 to be received in the insulating space 42 and insulated from the power element 12 mounted on the circuit board 10. Heat generated by the power element 12 while the communication device is operating is blocked and shut in mostly by the baffle 40. By contrast, only a minor portion of the heat reaches the optical fiber element 14 by thermal radiation. Hence, the baffle 40 is effective in bringing about thermal insulation whereby the temperature of the operating environment of the optical fiber element 14 in the insulating space 42 is lower than the ambient temperature in the vicinity of the power element 12. Hence, the optical fiber element 14, which is different from the power element 12 in terms of an operating temperature range, can function well.

In the casing 1, the plurality of heat-dissipating apertures 22 is formed on the first casing 20, and the baffle 40 is disposed inside the first casing 20. At least one of the heat-dissipating apertures 22 corresponds in position to the optical fiber element 14. Hence, the first casing 20 has at least one said heat-dissipating apertures 22 corresponding in position to the insulating space 42, such that air resulting from heat exchange in the insulating space 42 can flow out of the casing 1 of the communication device via the at least one said heat-dissipating apertures 22, thereby enhancing heat dissipation of the optical fiber element 14 and the insulating space 42.

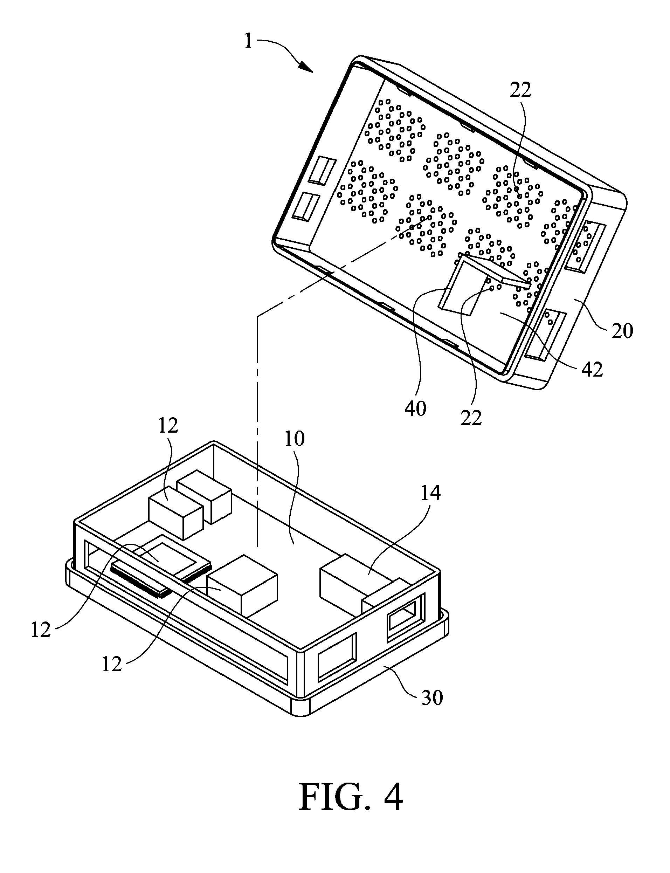

In the casing 1, it is good enough for the baffle 40 to be of a shape conducive to insulating the optical fiber element 14 from the power element 12. For example, the baffle 40 is inverted U-shaped or U-shaped in order to enclose the optical fiber element 14 and thereby form the open-ended insulating space 42 for receiving at least one portion of the optical fiber element 14. Alternatively, as shown in FIG. 4, the optical fiber element 14 is disposed at the periphery of the circuit board 10, and the baffle 40 is L-shaped so as to shield two power element-facing sides of the optical fiber element 14. The shape of the baffle 40 is not limited to the inverted U-shape, U-shape, L-shape, curved shape, semicircular shape, or T-shape; it is because the baffle 40 can be of any shape, provided that the shape is conducive to formation of the insulating space 42 whereby the optical fiber element 14 and the power element 12 are thermally insulated from each other.

In the first embodiment, the baffle 40 of the casing 1 abuts against the circuit board 10, such that the height of the baffle 40 equals the distance between the circuit board 10 and the first casing 20. The first casing 20, the baffle 40, and the circuit board 10 together form the insulating space 42, such that heat generated by the power element 12 is denied access to the insulating space 42, thereby enabling thermal insulation. In addition, an insulating pad or a buffering pad can be mounted on the circuit board 10 in a manner that the insulating pad or the buffering pad corresponds in position and shape to the baffle 40 so as to assist in securing or positioning the baffle 40.

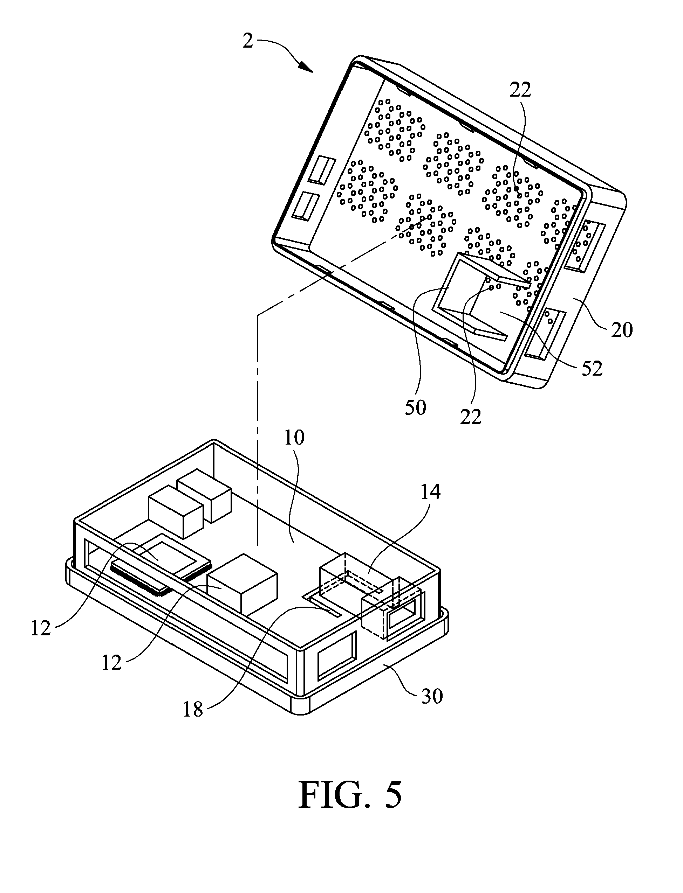

Referring to FIG. 5, there is shown a schematic view of a casing for a communication device according to the second embodiment of the present invention. As shown in FIG. 5, the height of a baffle 50 of a casing 2 is different from that of the baffle 40 of the casing 1 in the first embodiment. In the second embodiment, an opening 18 corresponding in shape and position to the baffle 50 is formed on the circuit board 10. The baffle 50 can pass through the opening 18. Hence, the height of the baffle 50 is greater than the distance between the circuit board 10 and the first casing 20 such that, after the first casing 20, the circuit board 10, and the second casing 30 have been put together, the baffle 50 penetrates the circuit board 10 by passing through the opening 18. As a result, the first casing 20, the baffle 40, and the circuit board 10 together form an insulating space 52, such that heat generated by the power element 12 is denied access to the insulating space 52, thereby enabling thermal insulation. In addition, the baffle 50 and the opening 18 corresponding in shape and position to the baffle 50 together assist in securing or positioning the circuit board 10. In this embodiment, the shape of the baffle 50 is exemplified by the inverted U-shaped; nonetheless, as mentioned earlier, the shape of the baffle 50 is not limited to the inverted U-shape, because the shape of the baffle 50 can also be U-shape, L-shape, curved shape, semicircular shape, or T-shape. It is because the baffle 50 can be of any shape, provided that the shape is conducive to formation of the insulating space 52 whereby the optical fiber element 14 and the power element 12 mounted on the circuit board 10 are thermally insulated from each other.

Hence, the casings 1, 2 for a communication device in the first embodiment and the second embodiment of the present invention are effective in separating a power element and an optical fiber element which differ from each other in ranges of operating temperature and requirements for heat dissipation and thereby effective in enabling the power element and the optical fiber element to be accommodated in an environment at their appropriate operating temperatures and thus function well. Thermal compound or thermal paste has to be applied to between the optical fiber element and cooling fins to enable heat dissipation according to the prior art. Given the baffle, it is feasible to prevent the thermal compound or thermal paste from denaturing or evaporating and eventually ending up in dysfunction and disconnection after long use at high temperatures. Hence, the casing of the present invention is conducive to the enhancement of the reliability and the extension of the service life of the communication device accommodated in the casing. Furthermore, the baffle and the first casing are integrally formed as a unitary structure to enhance the structural stability therebetween and enable a manufacturing process thereof to be carried out by injection molding. Unlike the prior art that teaches dissipating heat from a communication device by means of additional external cooling fins disposed thereon, the present invention provides a casing adapted for use with a communication device and designed to cut component costs and processing costs which might otherwise be incurred in a manufacturing process thereof.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A casing for a communication device, the casing receiving a circuit board, wherein a power element and an optical fiber element are mounted on the circuit board, the casing comprising:
a first casing comprising a plurality of heat-dissipating apertures;
a baffle disposed inside the first casing and corresponding in position to the optical fiber element for forming an insulating space in the vicinity of the optical fiber element and insulating the optical fiber element from the power element; and
a second casing engaged with the first casing for receiving the circuit board inside the casing.

2. The casing of claim 1, wherein the baffle is inverted U-shaped, U-shaped, L-shaped, curved, semicircular, or T-shaped.

3. The casing of claim 1, wherein at least one of the heat-dissipating apertures corresponds in position to the optical fiber element.

4. The casing of claim 2, wherein at least one of the heat-dissipating apertures corresponds in position to the optical fiber element.

5. The casing of claim 1, wherein the baffle abuts against the circuit board.

6. The casing of claim 2, wherein the baffle abuts against the circuit board.

7. The casing of claim 3, wherein the baffle abuts against the circuit board.

8. The casing of claim 4, wherein the baffle abuts against the circuit board.

9. The casing of claim 1, wherein an opening corresponding in shape to the baffle is formed on the circuit board, such that the baffle penetrates the circuit board by passing through the opening.

10. The casing of claim 2, wherein an opening corresponding in shape to the baffle is formed on the circuit board, such that the baffle penetrates the circuit board by passing through the opening.

11. The casing of claim 3, wherein an opening corresponding in shape to the baffle is formed on the circuit board, such that the baffle penetrates the circuit board by passing through the opening.

12. The casing of claim 4, wherein an opening corresponding in shape to the baffle is formed on the circuit board, such that the baffle penetrates the circuit board by passing through the opening.

13. The casing of claim 1, wherein the baffle and the first casing are integrally formed as a unitary structure.

14. The casing of claim 2, wherein the baffle and the first casing are integrally formed as a unitary structure.

15. The casing of claim 3, wherein the baffle and the first casing are integrally formed as a unitary structure.

16. The casing of claim 4, wherein the baffle and the first casing are integrally formed as a unitary structure.
